# EUROPÄISCHE PATENTSCHRIFT

(11) **EP 3 686 390 B1**
(45) Veröffentlichungstag und Bekanntmachung des Hinweises auf die Patenterteilung: **14.04.2021**
(21) Anmeldenummer: 19153774.5
(22) Anmeldetag: 25.01.2019
(51) Int. Cl.: E06B 9/13, E06B 9/60, F16P 3/02, F16P 1/02, B23Q 11/08, B60J 1/20

(54) **ROLLOSCHUTZABDECKUNG**
ROLLER PROTECTIVE COVER
COUVERCLE DE SÉCURITÉ POUR STORE

(43) Veröffentlichungstag der Anmeldung: 29.07.2020
(73) Patentinhaber: HEMA Maschinen- und Apparateschutz GmbH, 63500 Seligenstadt (DE)
(72) Erfinder: MAY, Matthias, 63863 Eschau (DE)
(74) Vertreter: Boult Wade Tennant LLP

(56) Entgegenhaltungen:
- DE-A1-102005 033 275
- DE-A1-102012 200 642
- DE-U1-202018 105 095
- US-A- 2 696 250
- US-A1- 2018 283 091

## Beschreibung

Die Erfindung betrifft gemäß dem Oberbegriff von Anspruch 1 eine Rolloschutzabdeckung zur Abdeckung eines variablen Arbeitsraumes mit wenigstens zwei Bauelementen, deren Abstand sich im Betrieb verändert, wobei die Rolloschutzabdeckung eine einem ersten der Baulelemente zugeordnete Wickelwelle und einen darauf aufgewickelten Rolloauszug aufweist, dessen freies Ende dem anderen zweiten Baulelement zugeordnet ist, wobei die Wickelwelle als Hohlwelle ausgebildet ist und innenseitig der Hohlwelle wenigstens eine als Schraubenfeder ausgebildete Torsionsfeder angeordnet ist, deren eines Ende mit der drehbaren Hohlwelle und deren anderes Ende mit einem ortsfesten Punkt in Bezug auf das erste Baulement festgelegt ist.

Derartige Schutzabdeckungen werden eingesetzt, um Arbeitsräume z.B. von Werkzeugmaschinen oder Hubvorrichtungen, abzuschirmen, deren Abmessungen sich im Betrieb ändern, weil beispielsweise bei den beiden zuvor genannten Anwendungsbeispielen ein Hubtisch mit einem abzudeckenden Scherenmechanismus verstellt oder bei einer Werkzeugmaschine ein Werkzeug- und/oder Werkstückhalter im Betrieb verstellt wird, während die Bearbeitungsstelle in allen Relativstellungen abgeschirmt werden muss.

Rolloschutzmechanismen lassen sich flexibel auch dort einsetzen, wo beengte Raumverhältnisse gegeben sind, da sie sich über sehr kleine und einfache Bauelemente an die beweglichen Teile der zu schützenden Vorrichtung anbinden lassen. Üblicherweise wird der Rolloschutzmechanismus mit einem ersten Baulelement im Bereich seiner Wickelwelle an einem ortsfesten Element der Vorrichtung mit dem zu schützenden Arbeitsraum festgelegt, während das dem ausziehbaren Ende des Rolloauszuges zugeordnete zweite Bauelement an einem beweglichen Teil der Vorrichtung im Bereich einer Zugangsöffnung des Arbeitsraumes angeordnet wird. Bewegt sich dieses Element im Betrieb, wird das Rollo entsprechend von der Wickelwelle abgewickelt, so dass die Zugangsöffnung immer über ihre gesamte Breite abgedeckt ist.

Das Wiederaufwickeln des Rolloauszuges erfolgt mit Hilfe der durch das Abwickeln vorgespannten Torsionsfeder, die auch dafür sorgt, dass der Rolloauszug zwischen der Wickelwelle und dem zweiten Bauelement an seinem freien Ende straff gespannt ist. In der vollständig aufgewickelten Position kann eine Vorspannung der Torsionfeder vorgesehen sein. Schwierigkeiten kann es bereiten, die Enden der als Torsionsfeder gewählten Schraubenfeder an der als Hohlwelle ausgebildeten Wickelwelle und an einem ortsfesten Punkt festzulegen. Für die Befestigung an der Hohlwelle sind bereits Stopfen bekannt, die mit der Hohlwelle drehstarr verbunden sind und an denen ein speziell ausgeformtes Wicklungsende verklemmt ist. Nachteilig hierbei ist, dass keine Standardfedern zum Einsatz kommen können, die von einem längeren Rohling einfach auf die passende Länge abgeschnitten werden können. Das verformte Windungsende kann auch die Dauerfestigkeit der Feder einschränken und insgesamt das Formänderungsvermögen der Feder im kritischen Bereich der Befestigung stark mindern.

Es ist hierbei auch bereits bekannt, mittig in der Hohlwelle und innerhalb der Schraubenfeder eine drehstarre Achse vorzusehen, an der die Schraubenfeder festgelegt ist. Für die Befestigung an dieser drehstarren Achse ist es bislang üblich, die letzten Federwindungen an einem Ende der Schraubenfedern bis auf den Durchmesser der Achse zu verjüngen und dort einen Schweißpunkt für die drehstarre Festlegung der Schraubenfeder vorzusehen. Nachteilig hierbei ist wiederum, dass die Schweißverbindung die Dauerfestigkeit der Feder einschränken kann und die verjüngten Windungen das Formänderungsvermögen der Feder erheblich einschränken, da sie für eine Verformung gar nicht oder nur stark eingeschränkt zur Verfügung stehen

Eine derartige Rolloschutzabdeckung ist beispielsweise aus DE 10 2012 200 642 A1 bekannt.

Die Aufgabe der vorliegenden Erfindung besteht darin, eine Rolloschutzabdeckung zu schaffen, die auch bei hohen Auszugsgeschwindigkeiten dauerhaft betriebssicher ist und auf kleinem Bauraum gute Rückstellkräfte aufbaut.

Hauptmerkmale der Erfindung sind im kennzeichnenden Teil von Anspruch 1 angegeben. Vorteilhafte Ausgestaltungen der Erfindung sind Gegenstand der Ansprüche 2 bis 15.

Erfindungsgemäß wird die Aufgabe der Erfindung dadurch gelöst, dass bei einer Rolloschutzabdeckung der eingangs genannten Art an wenigstens einem Ende der Schraubenfeder, das als abgeschnittene Windung des Schraubenwendels ausgebildet ist, wenigstens eine Klemmstelle mit einer Klemme vorgesehen ist, mit der das jeweilige Ende bezüglich der Wickelwelle oder des ersten Bauelements fixiert ist, wobei im Bereich der Klemmstelle innenseitig der Schraubenfeder ein Flansch vorgesehen ist, der sich über mehrere Windungsgänge der Schraubenfeder in axialer Richtung erstreckt und sich seinem freien Ende hin verjüngt.

Es hat sich gezeigt, dass mit der erfindungsgemäßen Lösung, die auf das Umformen der Windungsenden zur Schaffung einer Befestigungsöse verzichtet, eine dauerhaft belastbare Rückstelleinrichtung mittels einer als Torsionsfeder eingesetzten Schraubenfeder geschaffen worden ist. Einerseits verringert das einfache Ablängen der zum Einsatz kommenden Schraubenfeder von einem längeren Rohling die Herstellungskosten erheblich und zum anderen werden die besonders beanspruchten Einspannstellen an den Federenden auch nicht geschwächt. Da selbst die letzte Windung unverformt ist, steht auch die maximale Federlänge für eine Formänderung zur Verfügung.

Ein besonderer Vorteil im Hinblick auf die Dauerfestigkeit der Rollschutzabdeckung auch bei hohen Betriebsgeschwindigkeiten ergibt sich dadurch, dass innenseitig der Enden der Schraubenfedern jeweils ein Flansch mit kreisförmigem Querschnitt vorgesehen ist, der sich vorzugsweise zu seinem freien Ende hin gestuft oder kontinuierlich verjüngt. Dieser Innenflansch sorgt dafür, dass sich die unter zunehmender Vorspannung der Schraubenfeder beim Herausziehen des Rollos einschnürenden Windungen der Schraubenfeder im Bereich der Enden nicht unkontrolliert einschnüren können. Es hat sich nämlich gezeigt, dass insbesondere im Bereich der Klemmstellen eine besonders starke Verformung des Windungsdrahtes auftreten konnte, so dass an diesen Stellen frühzeitig Ermüdungsbrüche auftreten konnten. Dadurch, dass sich die Windungen im Bereich der Schraubenfederenden nun an den Außenumfang des Flansches anlegen können, werden diese bei einem weiteren Ausziehen des Rollos entlastet, so dass sich die Verformung der Feder im weiteren Verlauf auf die weiter mittig liegenden Federwindungen konzentrieren kann. Durch die Verjüngung wird ggf. sichergestellt, dass einerseits die Windungen an den Federenden ausgeglichen beansprucht werden und andererseits einen Beitrag zur Formänderung der Schraubenfeder insgesamt leisten können. Auch die Klemmstellen werden bei sich erhöhender Vorspannung der Feder durch die Reibanlage der Windungen an dem Flansch entlastet.

Das erste und zweite Bauelement kann im Auslieferungszustande der Rolloabdeckung zugeordnet sein, es ist aber auch möglich, diese Teile z.B. einer Werkzeugmaschine zuzuordnen und dann die Rolloabdeckung an diesen Elementen festzulegen. Beispielsweise könnte maschinenseitig ein Gehäuse vorgesehen sein, in dem dann das Rollo mit seiner Wickelwellenlagerung fest montiert wird. Das zweite Bauelement kann entsprechend als Einspannstelle für das freie Ende des Tuchbehangs an der Maschine ausgebildet sein. Es spielt auch keine Rolle, ob das erste oder das zweite Bauelement beweglich ausgeführt ist, wobei eine bezüglich des Arbeitsraumes feststehende Wickelwelle wegen der geringeren bewegten Massen bevorzugt ist.

Es können mehrere Torsionsfedern parallel angeordnet werden, um die Torsionssteifigkeit der Rückstellvorrichtung zu erhöhen.

In einer besonders bevorzugten Ausführungsform der Erfindung ist vorgesehen, dass zwischen dem größten Innendurchmesser des Flansches und der Schraubenfeder im nicht gespannten Zustand der Schraubenfeder eine Spiel- oder Übergangspassung vorgesehen ist. Dies bedeutet, dass sich die Feder bei der Montage ohne besondere Kraftanstrengung auf den Flansch aufschieben und ggf. verdrehen lässt, so dass einerseits eine einfache Montage möglich ist und andererseits nicht bereits bei der Montage Vorspanneffekte eintreten, die das Formänderungsvermögen der Schraubenfeder vermindern. Eine nach der Montage erfolgende Vorspannung, die ein gewisses Rückstellmoment der Wickelwelle auch bei vollständig aufgewickeltem Rollo bewirkt, bleibt hiervon unberührt.

Eine besonders vorteilhafte Ausbildung der Klemmstellen sieht vor, dass die wenigstens eine Klemme von dem Flansch radial nach außen vorspringt und die Drahtwindung umschlingt. Durch diese Maßnahme sind zwischen den Federwindungen nur in geringstmöglichem Umfang Teile angeordnet, die der Federweg begrenzen könnten. Der Flansch selbst wird in seiner Funktion nicht eingeschränkt.

Die Verjüngung des Flansches zu seinem freien Ende hin ist beispielsweise derart ausgeführt, dass sich der in einem ersten Abschnitt zylindrisch ausgebildete Flansch zu seinem freien Ende hin von der Klemmstelle weg konisch oder mit einem zunehmenden Krümmungsradius verjüngt.

Während es grundsätzlich auch möglich ist, das eine Ende der Schraubenfeder an einem beliebigen ortsfesten Punkt einzuspannen, hat sich insgesamt eine Ausführungsform der Erfindung als vorteilhaft erwiesen, bei welcher eine feststehende Achse vorgesehen ist, die sich mittig durch die Wickelwelle erstreckt. Hierdurch erhält die Rolloschutzabdeckung eine verbesserte Eigenstabilität auch im Hinblick auf die drehbare Lagerung der als Hohlwelle ausgebildeten Wickelwelle, so dass sie nicht auf eine entsprechende Halterung im Bereich des zu schützenden Arbeitsraumes angewiesen ist.

Die feststehende Achse ermöglicht es auch ohne Weiteres, mehrere Schraubenfedern parallel in axial versetzter Anordnung zueinander vorzusehen. Auch die koaxiale Anordnung von zwei ineinandergesteckten Schraubenfedern zur Erhöhung der Torsionssteifigkeit ist möglich, ebenso die Kombination von wenigstens zwei axial versetzten mit radial ineinander gesteckten Schraubenfedern.

Während sich bereits mit einer erfindungsgemäßen Festlegung der Schraubenfeder an einem Ende einer Verbesserung im Sinne der Aufgabe erreichen lässt, ist es besonders bevorzugt, die vorteilhafte Wirkung der Erfindung dadurch in vollem Umfang auszunutzen, dass an beiden Enden der Schraubenfeder die Windungsenden an wenigstens einer Klemmstelle mit jeweils einer Klemme bezüglich der Wickelwelle oder ortsfest bezüglich des ersten Bauelements festgelegt sind.

Eine weitere bevorzugte Ausführungsform der Erfindung sieht vor, dass wenigstens ein Teil der Klemmstellen an einem Stopfen ausgebildet ist, der drehstarr mit der Wickelwelle verbunden oder ortsfest bezüglich des ersten Bauelements festgelegt ist, wobei der Flansch an dem Stopfen ausgebildet ist. Mittels der Stopfen lassen sich die Klemmstellen und der Flansch an beiden Enden der Schraubenfeder in einfacher Weise integrieren, wobei die Festlegung des ortsfesten Stopfens an der bereits angesprochenen drehstarren Achse zweckmäßig ist.

Vorzugsweise weisen die Stopfen einen maximalen Außendurchmesser auf, der kleiner als der Innendurchmesser der Wickelwelle ist. Auf diese Weise können die Stopfen vollständig in die Wickelwelle eintauchen und es kann ein maximal breites Rollo eingesetzt werden.

In einer noch weiteren bevorzugten Ausführungsform der Erfindung ist vorgesehen, dass zwei oder mehr Klemmstellen über den Umfang verteilt an wenigstens einem Ende der Schraubenfeder mit Klemmen vorgesehen sind, die den Draht der Schraubenfederwindung verklemmen. Hierdurch wird der Halt gegen ein Verrutschen weiter verbessert, wobei die Klemmstellen in der Regel alle an dem letzten Windungsgang der Schraubenfeder angeordnet sind, damit die übrigen Windungsgänge für die Formänderung zur Verfügung stehen.

Eine besonders vorteilhafte Ausgestaltung der Klemmen sieht vor, dass diese jeweils eine Metallklammer aufweisen, die mittels einer Klemmschraube gegen die Drahtwindung der Schraubenfeder verklemmt ist. Eine Metallklammer benötigt wenig Bauraum und lässt sich leicht in der bereits angesprochenen vorteilhaften, radial von dem Flansch überstehenden Lage anordnen.

Beispielsweise kann die Metallklammer als U-förmiger Bügel ausgebildet sein, zwischen dessen Schenkeln der Draht verklemmt ist, wobei vorzugsweise die Klemmschrauben radial innenseitig der Windungen in axialer Richtung angeordnet sind und die beiden Schenkel der die Drahtwindung übergreifenden Metallklammer Bohrungen für die Klemmschraube aufweisen.

In einer besonders bevorzugten Ausführungsform der Erfindung ist vorgesehen, dass die Rolloschutzabdeckung ein Gehäuse aufweist, das die Wickelwelle aufnimmt und das erste Bauelement bildet oder mit diesem verbunden ist. Das Gehäuse bietet einen guten Schutz für das aufgewickelte Rollo und die Rückholmechanik vor Verschmutzungen. Eine an sich aus dem Stand der Technik bekannte Abstreifvorrichtung an der Austrittsöffnung des Rollos kann verhindern, dass Verschmutzungen in das Gehäuse gelangen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Teilansicht einer Rollschutzabdeckung;
- Fig. 2: eine Teilansicht einer Torsionsfeder mit einem Befestigungselement zur Festlegung an einer Wickelwelle;
- Fig. 3: die Ansicht aus Fig. 2 ohne die Torsionsfeder;
- Fig. 4: eine Ansicht ähnlich Fig. 3 mit von dem Befestigungselement gelöstem Stopfen;
- Fig. 5: eine Teilansicht der Torsionfeder mit einem Stopfen zur Festlegung an einer feststehenden Mittelachse;
- Fig. 6: eine Ansicht des Stopfens zur Festlegung an der Mittelachse ohne Torsionsfeder;
- Fig. 7: eine Ansicht einer Achse mit zwei axial versetzt angeordneten Torsionsfedern;
- Fig. 8: eine Ansicht einer Achse mit mehreren Befestigungselementen/Stopfen für insgesamt vier Torsionsfedern;
- Fig. 9: eine Ansicht eines doppelt ausgeführten Stopfens zur Festlegung an der Mittelachse für zwei radial ineinandergesteckte Torsionsfedern.

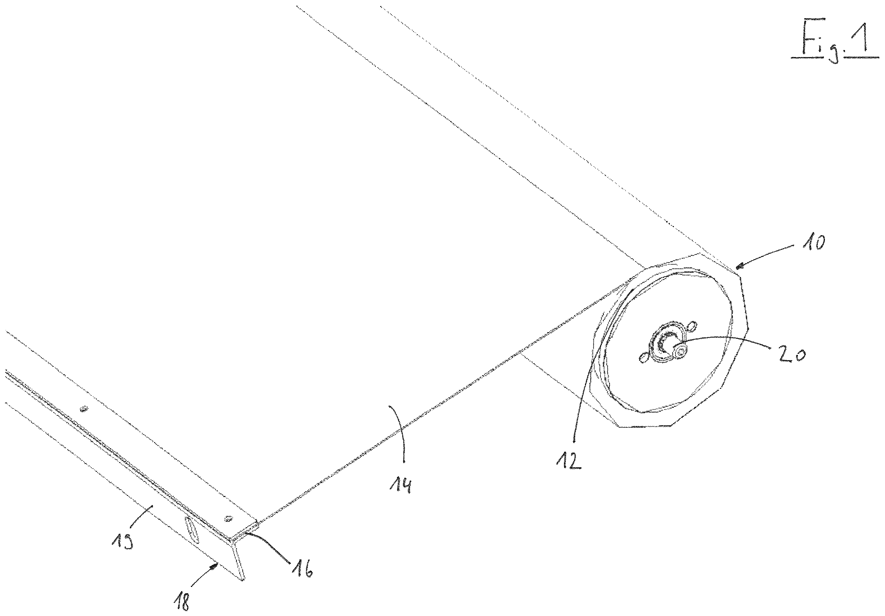

In Fig. 1 ist eine Rolloschutzabdeckung 10 schematisch dargestellt, die einen auf einer Wickelwelle 12 aufwickelbaren Rolloauszug 14 aufweist. Im Bereich der Wickelwelle 12 kann ein in Fig. 1 nicht gezeigtes Gehäuse vorgesehen sein, das als feststehendes erstes Bauelement an einem feststehenden Element einer Werkzeugmaschine befestigt werden kann. Die Wickelwelle 12 ist auf einer drehstarren Achse 20 drehbar gelagert. Am freien Ende 16 des Rolloauszuges 14 ist ein zweites, bewegliches Bauelement 18 in Form einer Winkelleiste 19 vorgesehen, die an einem beweglichen Element einer Werkzeugmaschine (nicht gezeigt) montiert werden kann. Die Achse 20 ist drehstarr an dem Gehäuse festgelegt. Zwischen dem beweglichen und dem feststehenden Element der Werkzeugmaschine befindet sich eine Öffnung zu einem Arbeitsraum, in welchem z.B. mittels eines entsprechenden Werkzeuges eine zerspanende Bearbeitung eines Werkstückes erfolgt. Der Rolloauszug 14 schirmt dabei die Umgebung vor umherfliegenden Spänen und ggf. Schneidfluid ab, wobei er auch einen Schutz für anwesende Personen dahingehend bildet, dass diese nicht versehentlich bewegte Teile berühren können. Die Bewegung des beweglichen Elementes ist erforderlich, wenn z.B. das Werkzeug einen bestimmten Verfahrweg beschreibt.

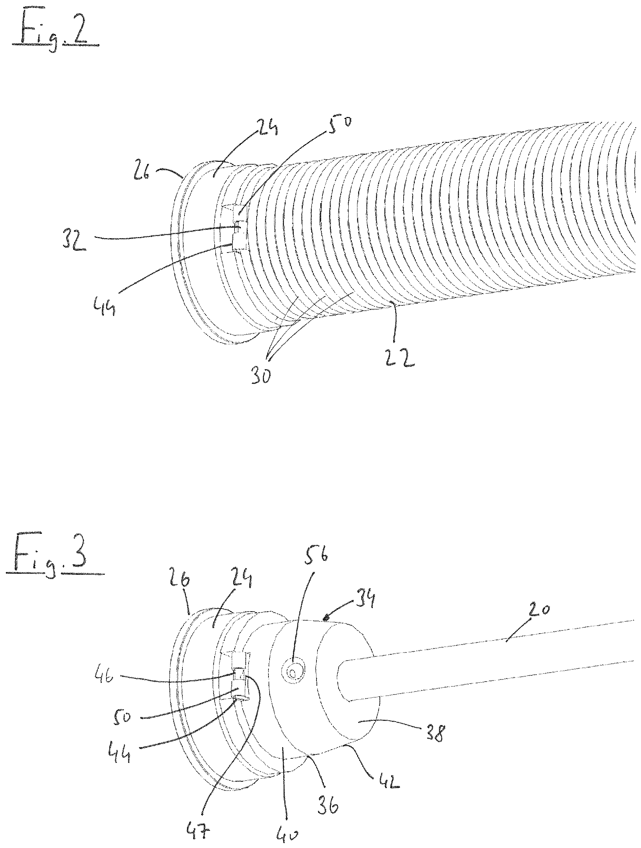

Während das Herausziehen des Rolloauszuges 14 von dem Verstellantrieb der Werkzeugmaschine oder einer sonstigen Vorrichtung bewerkstelligt werden kann, in der die Rolloschutzabdeckung 10 montiert ist, sind Vorkehrungen zu treffen, die das Wiederaufwickeln des flexiblen Rolloauszuges 14 bei einer Bewegung in gegensätzlicher Richtung bewirken. Hierzu ist in der als Hohlwelle ausgebildeten Wickelwelle 12 ein Rückstellmechanismus vorgesehen, der mit einer oder mehreren Torsionsfedern arbeitet. Die Torsionsfeder 22 ist bei einer in Fig. 2 bis 6 gezeigten Ausführungsform mit nur einer Torsionsfeder zwischen der Wickelwelle 12 und der feststehenden Mittelachse 20 angeordnet, wobei sie bereits bei vollständig aufgewickeltem Rollo unter einer gewissen Vorspannung steht, die sich beim Ausziehen des Rolloauszuges 14 erhöht.

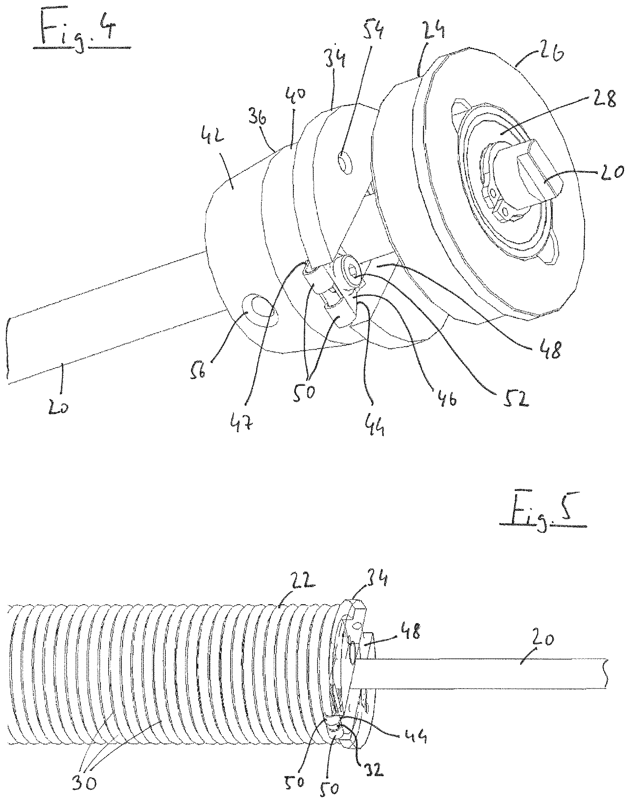

In Fig. 2 bis 4 ist die Festlegung der Torsionsfeder 22 an der Wickelwelle veranschaulicht, die zur Sichtbarmachung der wesentlichen Teile in der Darstellung weggelassen worden ist. Die Wickelwelle selbst sitzt drehstarr auf einem Ringabsatz 24 eines ringförmigen Befestigungselements 26, das über ein Wälzlager 28 (siehe Fig. 4) drehbar auf der feststehenden Mittelachse 20 der Gesamtvorrichtung gelagert ist.

Die Torsionsfeder 22 ist als eine Schraubenfeder mit einer Vielzahl von Windungsgängen 30 aus Draht ausgebildet, wobei insbesondere aus Fig. 2 und Fig. 5 gut zu erkennen ist, dass das jeweilige Ende 32 der Schraubenfeder ohne besondere Formgebung ausgebildet ist, sondern durch eine einfache Stirnfläche, die durch Durchtrennen der Windung eines längeren Schraubenrohlings entstanden ist. Aufwändige Formgebungsvorgänge können daher entfallen.

Die Windungsenden 32 sind jeweils an einem Stopfen 34 verklemmt, der sowohl zur drehstarren Festlegung an der Wickelwelle 12 über das Befestigungselement 26 als auch zur drehstarren Festlegung an der drehstarren Achse 20 konzipiert ist. Hierdurch kann die Zahl unterschiedlicher Bauteile vermindert werden, es ist aber selbstverständlich auch möglich, die Stopfen für ihren jeweiligen Befestigungszweck konstruktiv individuell anzupassen.

Wie in Fig. 3, 4 und 6 gut zu erkennen ist, besitzen die Stopfen 34 Flansche 36 mit kreisförmigen Querschnitten und ragen mit ihren freien Enden 38 in die Schraubenfedern hinein. Die Flansche 36 besitzen dabei jeweils einen zylinderförmigen Abschnitt 40 mit konstantem Durchmesser und einen sich daran anschließenden konischen Abschnitt 42, der sich zum freien Ende 38 des Flansches 34 hin verjüngt. Der Durchmesser des zylindrischen Abschnittes 40 ist so gewählt, dass sich die Schraubenfeder bei der Montage leicht von Hand aufsetzen lässt, bezogen auf den Innendurchmesser der entspannten Torsionsfeder/Schraubenfeder 22 liegt also eine Spielpassung, ggf. auch eine Übergangspassung für einen strammeren Sitz vor.

Das Verklemmen der Schraubenfeder erfolgt im Bereich der Enden 32 mit Hilfe wenigstens einer, bei dem gezeigten Ausführungsbeispiel mit Hilfe zweier Befestigungsklemmen 44, die als bügelartige Blechklammern ausgebildet sind. Die beiden Befestigungsklemmen 44 definieren zwei um 180° versetzte Befestigungsstellen für den Windungsdraht 30 der Schraubenfeder 22. Ggf. können auch noch mehr Befestigungsstellen mit weiteren Befestigungsklemmen 44 vorgesehen sein, um aber das Formänderungsvermögen der Schraubenfeder 22 nicht zu beeinträchtigen, sollten diese idealerweise sich über die erste Windung am Ende 32 der Schraubenfeder verteilen.

Wie insbesondere in Fig. 4 gut zu erkennen ist, sitzt die Blechklammer mit ihren beiden Schenkeln 46, 47 radial nach innen weisend in einer radialen Ausnehmung 48. Die beiden Schenkel 46, 47 umgreifen die Drahtwindung 30 der Feder 22 beidseitig und sind über Stege 50 bügelartig miteinander verbunden. In den beiden Schenkeln 46, 47 ist fluchtende Durchgangslöcher (nicht sichtbar) ausgebildet, durch die eine Klemmschraube 52 ragt, die in ein axial angeordnetes Innengewinde (ebenfalls nicht erkennbar) eingedreht ist.
Bei der Montage der Schraubenfeder wird entsprechend zunächst entweder das Ende 32 der Schraubenfeder durch leichtes relatives Verdrehen zu dem Stopfen 34 zwischen die Schenkel 46, 47 der Befestigungsklemme 44 radial innerhalb der Stege 50 eingedreht, wenn die Befestigungsklemme 44 zunächst mit lose eingedrehter Klemmschraube 52 vormontiert worden ist, oder-was bei mehreren Befestigungsstellen bevorzugt sein kann- die Befestigungsklemmen 44 werden auf die Windung 30 der zuvor in ihrer Winkellage zu dem Stopfen 34 ausgerichtete Schraubenfeder 22 aufgesteckt. Schließlich werden dann die Klemmschrauben 52 angezogen, so dass die Schraubenfeder 22 drehstarr zu dem Stopfen 34 verklemmt ist.

Bei der Festlegung drehstarr relativ zur Wickelwelle 12 wird nun der Stopfen 34 mit Hilfe von Axialschrauben (nicht gezeigt) mit dem Befestigungselement 26 verbunden, wobei die Axialschrauben durch axial Durchgangsbohrungen in dem Befestigungselement 26 ragen und in axiale Gewindebohrungen 54 in dem Stopfen 34 eingreifen. Das Befestigungselement 26 kann zuvor auf dem Lager 28 montiert worden sein.

Die Festlegung des Stopfens 34 an der drehstarren Achse 20 am anderen Ende 32 der Schraubenfeder 22 erfolgt über wenigstens eine radial ausgerichtete Gewindedurchgangsbohrung 56, in die eine radial angeordnete Klemmschraube (nicht gezeigt) eingedreht wird. Hierbei wird das radial innen liegende Schaftende der Klemmschraube gegen die drehstarre Achse 20 verklemmt, so dass nach dem nachfolgenden Verklemmen der Schraubenfeder mit dem Stopfen die Schraubenfeder an dem entsprechenden Ende auch mit der drehstarren Achse 20 verbunden ist.

Die Montagereihenfolge ergibt sich aus der Zugänglichkeit der Klemmschrauben. Deshalb wird zunächst der Stopfen 34 zur Festlegung eines Endes der Schraubenfeder an der drehstarren Achse 20 mit dieser verklemmt und anschließend die Schraubenfeder mit diesem Stopfen in der beschriebenen Art und Weise verklemmt.

Schließlich wird die gezeigte Vorrichtung mit einem Rolloauszug 14 bewickelt und die Vorrichtung wird zwischen den relativ zueinander beweglichen Teilen der Werkzeugmaschine oder einer anderen Vorrichtung montiert. Hierbei kann so vorgegangen werden, dass in der Nulllage bei vollständig aufgewickeltem Rollo bereits eine relative Verdrehung zwischen der Wickelwelle 12 und der drehstarren Achse 20 vorgenommen wird, um eine Vorspannung der Schraubenfeder aufzubauen.

Die Schraubenfeder 22 ist derart angeordnet, dass es bei einem Ausziehen des Rollos im Betrieb zu einer Vorspannung der Feder 22 unter einem Einschnüren der Windungsgänge 30 kommt. Damit dies im Bereich der Klemmstellen nicht unkontrolliert ablaufen kann, ist der Flansch 36 zur Begrenzung der Einschnürung in diesem Bereich vorgesehen, der vermeidet, dass die Windungsgänge 30 der Schraubenfeder 22 im Bereich der Klemmstellen durch übermäßige Verformung überbeansprucht werden. Hierdurch erhöht sich die Dauerfestigkeit der Rolloschutzabdeckung 10 und sie kann auch höheren Geschwindigkeiten ausgesetzt werden.

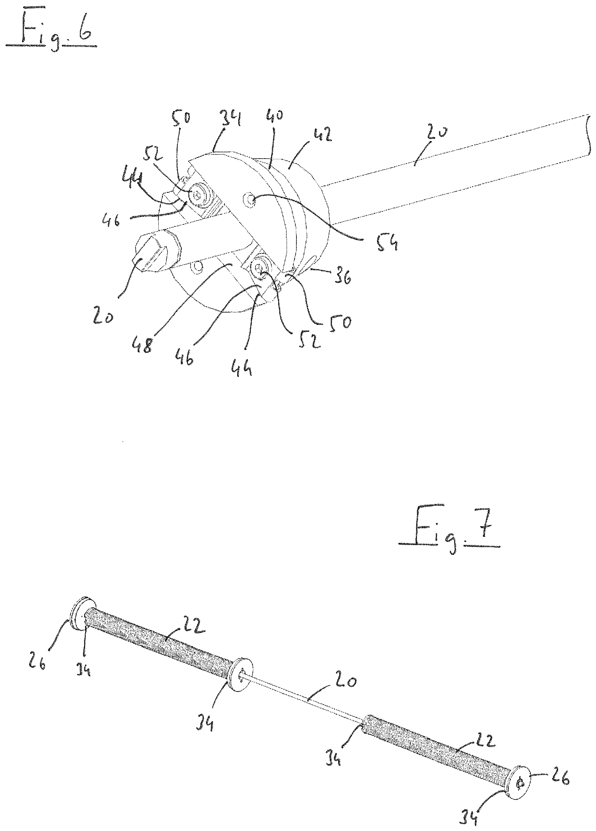

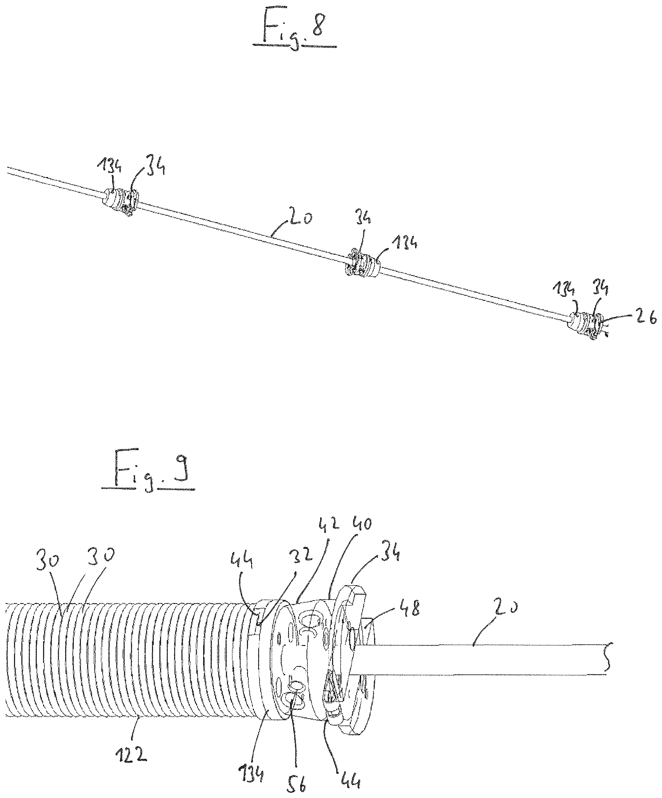

Um höhere Rückstellkräfte aufbauen zu können, ist es ohne weiteres möglich, auch zwei oder mehr Torsionsfedern 22 parallel zueinander anzuordnen. Hierbei können die Schraubenfedern 22 axial versetzt zueinander (siehe Fig. 7) und/oder radial ineinandergesteckt angeordnet (siehe Fig. 8 und 9) werden.

Die axiale Anordnung ergibt keine wesentlichen zusätzlichen Besonderheiten, die beiden Stopfen 34 zur Festlegung an der drehstarren Achse 20 sind jeweils weitere mittig angeordnet, während die beiden anderen Stopfen 34 außenseitig im Bereich der Lager 28 der Wickelwelle 12 angeordnet sind.

Bei der zusätzlichen Anordnung von Torsionsfedern radial versetzt, werden die in Fig. 8 und 9 gezeigten zusätzlichen Stopfen 134 eingesetzt, deren maximaler Außendurchmesser kleiner als der Innendurchmesser der äußeren Schraubenfeder ausgebildet ist. Somit bildet ein größerer Stopfen 34 den Halt für die äußere Schraubenfeder währende der kleinere Stopfen 134 axial versetzt einen Halt für die innere Schraubenfeder 122 (siehe Fig. 9) mit kleinerem Durchmesser bietet. Der Verbund zwischen den beiden Stopfen 34 und 134 kommt an beiden Enden des Federpaketes aus den beiden Schraubenfedern zum Einsatz, wobei deren Festlegung an dem Stopfen in der beschriebenen Art und Weise mit Befestigungsklemmen 44 erfolgt. Auch die Anbringung des Verbundes aus den beiden Stopfen 34 und 134 erfolgt in gleicher Weise wie zuvor bei der einfachen Ausführungsform an dem Befestigungselement 26 im Bereich der Lager 28 drehstarr zur Wickelwelle 12 und am gegenüberliegenden Ende des Paketes mit wenigstens einer radialen Klemmschraube relativ zur drehstarren Achse 20.

Die Erfindung ist nicht auf eine der vorbeschriebenen Ausführungsformen beschränkt, sondern in vielfältiger Weise abwandelbar.

### Bezugszeichenliste

- 10: Rolloschutzabdeckung
- 12: Wickelwelle
- 14: Rolloauszug
- 16: freies Ende Rolloauszug
- 18: zweites Bauelement
- 19: Winkelleiste
- 20: drehstarre Achse
- 22: Torsionsfeder/Schraubenfeder
- 24: Ringabsatz
- 26: Befestigungselement
- 28: Wälzlager
- 30: Windungsgänge
- 32: Windungsenden
- 34: Stopfen
- 36: Flansch
- 38: freies Ende des Flansches
- 40: zylinderförmiger Abschnitt
- 42: konischer Abschnitt
- 44: Befestigungsklemme
- 46, 47: Schenkel der Befestigungsklemme
- 48: radiale Ausnehmung
- 50: Stege
- 52: Klemmschraube
- 54: axiale Gewindebohrung
- 56: radiale Gewindedurchgangsbohrung
- 122: innere Schraubenfeder
- 134: zusätzlicher Stopfen

## Patentansprüche

1. Rolloschutzabdeckung (10) zur Abdeckung eines variablen Arbeitsraumes mit wenigstens zwei Bauelementen (18), deren Abstand sich im Betrieb verändert, wobei die Rolloschutzabdeckung (10) eine einem ersten der Baulelemente zugeordnete Wickelwelle und einen darauf aufgewickelten Rolloauszug (14) aufweist, dessen freies Ende (16) dem anderen zweiten Baulelement (18) zugeordnet ist, wobei die Wickelwelle als Hohlwelle ausgebildet ist und innenseitig der Hohlwelle wenigstens eine als Schraubenfeder ausgebildete Torsionsfeder (22) angeordnet ist, deren eines Ende (32) mit der drehbaren Hohlwelle und deren anderes Ende (32) mit einem ortsfesten Punkt in Bezug auf das erste Baulement festgelegt ist, **dadurch gekennzeichnet, dass** an wenigstens einem Ende (32) der Schraubenfeder (22), das als abgeschnittene Windung des Schraubenwendels ausgebildet ist, wenigstens eine Klemmstelle mit einer Klemme (44) vorgesehen ist, mit der das jeweilige Ende bezüglich der Wickelwelle (12) oder des ersten Bauelements fixiert ist, wobei im Bereich der Klemmstelle innenseitig der Schraubenfeder (22) ein Flansch (36) vorgesehen ist, der sich über mehrere Windungsgänge (30) der Schraubenfeder (22) in axialer Richtung erstreckt.

2. Rollschutzabdeckung nach Anspruch 1, **dadurch gekennzeichnet, dass** sich der Flansch (36) zu seinem freien Ende (38) hin gestuft oder kontinuierlich verjüngt.

3. Rolloschutzabdeckung nach Anspruch 1 oder 2, **dadurch gekennzeichnet, dass** zwischen dem größten Innendurchmesser des Flansches (36) und der Schraubenfeder (22) im nicht gespannten Zustand der Schraubenfeder (22) eine Spiel- oder Übergangspassung vorgesehen ist.

4. Rolloschutzabdeckung nach einem der Ansprüche 1 bis 3, **dadurch gekennzeichnet, dass** die wenigstens eine Klemme (44) von dem Flansch radial nach außen vorspringt und die Drahtwindung (30) umschlingt.

5. Rolloschutzabdeckung nach einem der vorhergehenden Ansprüche, **dadurch gekennzeichnet, dass** sich der in einem Abschnitt (40) zylindrisch ausgebildete Flansch (36) zu seinem freien Ende (38) hin von der Klemmstelle weg konisch oder mit einem zunehmenden Krümmungsradius verjüngt.

6. Rolloschutzabdeckung nach einem der vorhergehenden Ansprüche, **dadurch gekennzeichnet, dass** eine feststehende Achse (20) vorgesehen ist, die sich mittig durch die Wickelwelle (12) erstreckt.

7. Rolloschutzabdeckung nach einem der vorhergehenden Ansprüche, **dadurch gekennzeichnet, dass** an beiden Enden der Schraubenfeder die Windungsenden (32) an wenigstens einer Klemmstelle mit jeweils einer Klemme (44) bezüglich der Wickelwelle (12) oder ortsfest bezüglich des ersten Bauelements festgelegt sind.

8. Rolloschutzabdeckung nach einem der vorhergehenden Ansprüche, **dadurch gekennzeichnet, dass** wenigstens ein Teil der Klemmstellen an einem Stopfen (34) ausgebildet ist, der drehstarr mit der Wickelwelle (12) verbunden oder ortsfest bezüglich des ersten Bauelements (11) festgelegt ist, wobei der Flansch (36) an dem Stopfen (34) ausgebildet ist.

9. Rolloschutzabdeckung nach einem der vorhergehenden Ansprüche, **dadurch gekennzeichnet, dass** zwei oder mehr Klemmstellen über den Umfang verteilt an wenigstens einem Ende der Schraubenfeder (22) mit Klemmen (44) vorgesehen sind, die den Draht der Schraubenfederwindung (30) verklemmen.

10. Rolloschutzabdeckung nach einem der vorhergehenden Ansprüche, **dadurch gekennzeichnet, dass** die Klemmen (44) jeweils eine Metallklammer aufweisen, die mittels einer Klemmschraube (52) gegen die Drahtwindung (30) der Schraubenfeder (22) verklemmt ist.

11. Rolloschutzabdeckung nach Anspruch 10, **dadurch gekennzeichnet, dass** die Metallklammer als U-förmiger Bügel ausgebildet ist, zwischen dessen Schenkeln (46, 47) die Drahtwindung (30) verklemmt ist.

12. Rolloschutzabdeckung nach Anspruch 10 oder 11, **dadurch gekennzeichnet, dass** die Klemmschrauben (52) radial innenseitig der Windungen (30) in axialer Richtung angeordnet sind und die beiden Schenkel (46, 47) der die Drahtwindung (30) übergreifenden Metallklammer Bohrungen für die Klemmschraube (52) aufweisen.

13. Rolloschutzabdeckung nach einem der vorhergehenden Ansprüche, **dadurch gekennzeichnet, dass** eine drehstarre Achse (20) vorgesehen mittig in der Wickelwelle (12) angeordnet ist, so dass die Schraubenfeder (22) zwischen der Achse (20) und der Wickelwelle (12) liegt.

14. Rolloschutzabdeckung nach Anspruch 13, **dadurch gekennzeichnet, dass** ein erster Stopfen (34) mit zwei oder mehr Klemmstellen drehstarr mit der Wickelwelle (12) und ein zweiter Stopfen (34) mit zwei oder mehr Klemmstellen drehstarr mit der drehstarren Achse verbunden ist.

15. Rolloschutzabdeckung nach einem der vorhergehenden Ansprüche, **dadurch gekennzeichnet, dass** sie ein Gehäuse aufweist, das die Wickelwelle (12) aufnimmt und das erste Bauelement bildet oder mit diesem verbunden ist.

## Claims

1. Roller blind cover (10) for covering a variable working space, having at least two structural elements (18) the spacing of which changes during operation, wherein the roller blind cover (10) has a winding shaft associated with a first of the structural elements and a roller blind extension (14) wound thereon, the free end (16) of which is associated with the other second structural element (18), wherein the winding shaft is designed as a hollow shaft and on the inside of the hollow shaft at least one torsion spring (22) designed as a helical spring is arranged, one end (32) of which is fixed to the rotatable hollow shaft and the other end (32) of which is fixed to a stationary point with respect to the first structural element, **characterised in that**, at at least one end (32) of the helical spring (22), which end is designed as a cut-off coil of the helical coiling, at least one clamping point is provided with a clamp (44), to which the respective end is fixed with respect to the winding shaft (12) or the first structural element, wherein in the region of the clamping point on the inside of the helical spring (22) a flange (36) is provided which extends in the axial direction over a plurality of coil turns (30) of the helical spring (22).

2. Roller blind protective cover according to claim 1, **characterised in that** the flange (36) tapers in a stepped or continuous manner towards its free end (38).

3. Roller blind protective cover according to claim 1 or 2, **characterised in that** a clearance fit or transition fit is provided between the largest inner diameter of the flange (36) and the helical spring (22) when the helical spring (22) is not tensioned.

4. Roller blind protective cover according to any of claims 1 to 3, **characterised in that** the at least one clamp (44) projects radially outwards from the flange and wraps around the wire coil (30).

5. Roller blind protective cover according to any of the preceding claims, **characterised in that** the flange (36), which is cylindrical in one section (40), tapers conically or with an increasing radius of curvature towards its free end (38) away from the clamping point.

6. Roller blind protective cover according to any of the preceding claims, **characterised in that** a fixed axle (20) is provided which extends centrally through the winding shaft (12).

7. Roller blind protective cover according to any of the preceding claims, **characterised in that**, at both ends of the helical spring, the coil ends (32) are each fixed at at least one clamping point with a clamp (44) with respect to the winding shaft (12) or in a stationary manner with respect to the first structural element.

8. Roller blind protective cover according to any of the preceding claims, **characterised in that** at least a portion of the clamping points is formed on a plug (34) which is connected in a torsionally rigid manner to the winding shaft (12) or is fixed in a stationary manner with respect to the first structural element (11), wherein the flange (36) is formed on the plug (34).

9. Roller blind protective cover according to any of the preceding claims, **characterised in that** two or more clamping points are provided with clamps (44) distributed over the circumference at at least one end of the helical spring (22), which clamps clamp the wire of the helical spring coil (30).

10. Roller blind protective cover according to any of the preceding claims, **characterised in that** the clamps (44) each have a metal clip which is clamped against the wire coil (30) of the helical spring (22) by means of a clamping screw (52).

11. Roller blind protective cover according to claim 10, **characterised in that** the metal clip is formed as a U-shaped bracket between the legs (46, 47) of which the wire coil (30) is clamped.

12. Roller blind protective cover according to claim 10 or 11, **characterised in that** the clamping screws (52) are arranged radially on the inside of the windings (30) in the axial direction and both legs (46, 47) of the metal clamp engaging over the wire coil (30) have bores for the clamping screw (52).

13. Roller blind protective cover according to any of the preceding claims, **characterised in that** a torsionally rigid axle (20) is provided centrally in the winding shaft (12) so that the helical spring (22) lies between the axle (20) and the winding shaft (12).

14. Roller blind protective cover according to claim 13, **characterised in that** a first plug (34) having two or more clamping points is torsionally rigidly connected to the winding shaft (12) and a second plug (34) having two or more clamping points is torsionally rigidly connected to the torsionally rigid axle.

15. Roller blind protective cover according to any of the preceding claims, **characterised in that** it has a housing which receives the winding shaft (12) and forms or is connected to the first component.

## Revendications

1. Couvercle de protection de store (10) pour recouvrir un espace de travail variable avec au moins deux composants (18), dont l'espacement varie lors du fonctionnement, dans lequel le couvercle de protection de store (10) présente un arbre d'enroulement associé à un premier des composants et un système d'extraction de store (14) enroulé sur celui-ci, dont l'extrémité libre (16) est associée à l'autre deuxième composant (18), dans lequel l'arbre d'enroulement est réalisé en tant qu'arbre creux et au moins un ressort de torsion (22) réalisé en tant que ressort hélicoïdal est disposé côté intérieur de l'arbre creux, dont une extrémité (32) est fixée avec l'arbre creux rotatif et dont l'autre extrémité (32) est fixée avec un point stationnaire par rapport au premier composant, **caractérisé en ce qu'**est prévu sur au moins une extrémité (32) du ressort hélicoïdal (22), qui est réalisée en tant que spire découpée à la bonne longueur de la spirale, au moins un emplacement de serrage avec une attache (44), avec laquelle l'extrémité respective est bloquée par rapport à l'arbre d'enroulement (12) ou au premier composant, dans lequel est prévue, dans la zone de l'emplacement de serrage, du côté intérieur du ressort hélicoïdal (22), une bride (36), qui s'étend dans une direction axiale sur plusieurs pas de spire (30) du ressort hélicoïdal (22).

2. Couvercle de protection de store selon la revendication 1, **caractérisé en ce que** la bride (36) se rétrécit de manière étagée ou de manière continue en direction de son extrémité libre (38).

3. Couvercle de protection de store selon la revendication 1 ou 2, **caractérisé en ce qu'**est prévue une adaptation de jeu ou de transition entre le diamètre intérieur le plus grand de la bride (36) et du ressort hélicoïdal (22) dans l'état non mis en tension du ressort hélicoïdal (22).

4. Couvercle de protection de store selon l'une quelconque des revendications 1 à 3, **caractérisé en ce que** l'au moins une attache (44) fait saillie radialement vers l'extérieur de la bride et entoure la spire de fil métallique (30).

5. Couvercle de protection de store selon l'une quelconque des revendications précédentes, **caractérisé en ce que** la bride (36) réalisée de manière cylindrique dans une section (40) se rétrécit de manière conique ou avec un rayon d'incurvation croissant en direction de son extrémité libre (38) en s'éloignant de l'emplacement de serrage.

6. Couvercle de protection de store selon l'une quelconque des revendications précédentes, **caractérisé en ce qu'**est prévu un axe (20) immobile, qui s'étend au centre à travers l'arbre d'enroulement (12).

7. Couvercle de protection de store selon l'une quelconque des revendications précédentes, **caractérisé en ce que** les extrémités de spire (32) sur au moins un emplacement de serrage sont fixées avec respectivement une attache (44) par rapport à l'arbre d'enroulement (12) ou de manière stationnaire par rapport au premier composant sur les deux extrémités du ressort hélicoïdal.

8. Couvercle de protection de store selon l'une quelconque des revendications précédentes, **caractérisé en ce qu'**au moins une partie des emplacements de serrage est réalisée sur un bouchon (34), qui est relié de manière rigide en rotation à l'arbre d'enroulement (12) ou est fixé de manière stationnaire par rapport au premier composant (11), dans lequel la bride (36) est réalisée sur le bouchon (34).

9. Couvercle de protection de store selon l'une quelconque des revendications précédentes, **caractérisé en ce que** sont prévus deux emplacements de serrage ou plus de manière répartie sur la périphérie sur au moins une extrémité du ressort hélicoïdal (22) avec des attaches (44), qui coincent le fil métallique de la spire de ressort hélicoïdal (30).

10. Couvercle de protection de store selon l'une quelconque des revendications précédentes, **caractérisé en ce que** les attaches (44) présentent respectivement une agrafe en métal, qui est coincée contre la spire de fil métallique (30) du ressort hélicoïdal (22) au moyen d'une vis de serrage (52).

11. Couvercle de protection de store selon la revendication 10, **caractérisé en ce que** l'agrafe en métal est réalisée en tant qu'étrier en U, entre les branches (46, 47) duquel est coincée la spire de fil métallique (30).

12. Couvercle de protection de store selon la revendication 10 ou 11, **caractérisé en ce que** les vis de serrage (52) sont disposées côté intérieur radialement des spires (30) dans une direction axiale et les deux branches (46, 47) des agrafes en métal surmontant la spire de fil métallique (30) présentent des alésages pour la vis de serrage (52).

13. Couvercle de protection de store selon l'une quelconque des revendications précédentes, **caractérisé en ce qu'**un axe (20) rigide en rotation est disposé au centre dans l'arbre d'enroulement (12) de sorte que le ressort hélicoïdal (22) se situe entre l'axe (20) et l'arbre d'enroulement (12).

14. Couvercle de protection de store selon la revendication 13, **caractérisé en ce qu'**un premier bouchon (34) est relié par deux emplacements de serrage ou plus de manière rigide en rotation à l'arbre d'enroulement (12) et un deuxième bouchon (34) est relié par deux emplacements de serrage ou plus de manière rigide en rotation à l'axe rigide en rotation.

15. Couvercle de protection de store selon l'une quelconque des revendications précédentes, **caractérisé en ce qu'**il présente un boîtier, qui loge l'arbre d'enroulement (12) et forme le premier composant ou est relié à celui-ci.
